# FASCICULE DE BREVET EUROPEEN

(11) **EP 3 270 108 B1**
(45) Date de publication et mention de la délivrance du brevet: **14.10.2020**
(21) Numéro de dépôt: 17178907.6
(22) Date de dépôt: 30.06.2017
(51) Int. Cl.: G01C 21/34, B60W 40/04, G08G 1/0968, G08G 1/00

(54) **PROCÉDÉ D'ASSISTANCE D'UN CONDUCTEUR D'UN VÉHICULE EN FONCTION D'INFORMATIONS FOURNIES PAR UN VÉHICULE PILOTE, ET DISPOSITIF ASSOCIÉ**
FAHRERASSISTENZSYSTEM EINES FAHRZEUGS IN ABHÄNGIGKEIT VON DURCH EIN PILOTFAHRZEUG GELIEFERTEN INFORMATIONEN, UND ENTSPRECHENDE VORRICHTUNG
METHOD FOR ASSISTING A DRIVER OF A VEHICLE BASED ON INFORMATION PROVIDED BY A PILOT VEHICLE, AND ASSOCIATED DEVICE

(30) Priorité: 12.07.2016 FR 1656661
(43) Date de publication de la demande: 17.01.2018
(73) Titulaire: PSA Automobiles SA, 78300 Poissy (FR)
(72) Inventeur: LESEIGNEUR, Christelle, 78180 Montigny le Bretonneux (FR); ROY, Franck, 91700 Fleury Merogis (FR)

(56) Documents cités:
- WO-A1-2014/115019
- WO-A1-2014/139821
- WO-A2-2007/143756
- WO-A2-2014/115016
- US-A1- 2006 142 933
- US-A1- 2016 046 237

## Description

L'invention concerne les véhicules, éventuellement de type automobile, et plus précisément les assistances à la conduite de tels véhicules.

On notera que l'invention concerne non seulement les véhicules à conduite exclusivement manuelle, mais également les véhicules au moins partiellement autonomes (c'est-à-dire propres à être conduits manuellement pendant des phases de conduite manuelle ou de façon automatisée pendant des phases de conduite autonome, ou bien propres à être conduits en permanence de façon automatisée pendant des phases de conduite autonome).

De nombreux véhicules, généralement de type automobile, comprennent un dispositif d'aide à la navigation chargé de déterminer des itinéraires en fonction de données cartographiques et d'informations de circulation (ou trafic) et éventuellement d'informations météorologiques. Il arrive fréquemment que les données cartographiques stockées dans la base de données embarquée dans un véhicule ne soient pas à jour et/ou que les informations de circulation ou météorologiques fournies par les réseaux d'informations routières et/ou météorologiques ne correspondent pas exactement à la réalité observable sur une route. De ce fait, il arrive fréquemment qu'un itinéraire calculé ne soit pas optimal, soit parce qu'il impose des contournements inutiles, soit parce qu'il ne contient pas des contournements indispensables, soit encore parce qu'il ne prend pas en compte la fermeture temporaire d'une station de fourniture d'énergie ou d'un espace de ravitaillement ou une zone de travaux, ou une voiture ou un objet immobilisé sur la route.

On connait par le document WO 2014/139821 un procédé et un système destinés à un véhicule semi-autonome, le procédé et le système lui procurant des itinéraires facultatifs qui varient selon l'importance de la conduite autonome. Le système exécute des procédés comprenant l'agrégation de données provenant de diverses sources afin de positionner et d'orienter le véhicule, l'attribution d'une valeur de conduite autonome à différents segments d'itinéraire, la détermination d'un itinéraire optimal par la minimisation d'une distance entre une position de départ et une position de destination et par la maximisation du pourcentage de valeur autonome attribuée, et l'affichage de l'itinéraire optimal.

On connait par le document WO2007143757 un agencement pour la détection d'obstacle dans des véhicules autonomes où deux manipulations de données significatives sont employées afin de fournir une lecture plus précise d'obstacles potentiels et contribuer ainsi à un fonctionnement plus efficace et rentable d'un véhicule autonome. Une première manipulation de données implique de distinguer entre ces obstacles potentiels qui sont entourés par une diffusion de bruit de fond significative dans un diagramme de radar et ceux qui ne le sont pas, ces derniers étant plus susceptibles de représenter des obstacles binaires qui doivent être évités. Une seconde manipulation de données implique la mise à jour d'une image de radar dans la mesure du possible lorsqu'un objet se rapproche. De préférence, la première manipulation de données précitée peut être effectuée via un filtrage de contexte, alors que la seconde manipulation de données précitée peut être effectuée via une hystérésis à base de grands objets binaires.

L'invention a notamment pour but d'améliorer la situation.

Elle propose notamment à cet effet un procédé, permettant d'offrir une assistance à un conducteur d'un véhicule (suiveur) comprenant des moyens de communication propres à échanger des messages par voie d'ondes, et comprenant une étape dans laquelle :
- on détermine dans le véhicule (suiveur) des itinéraires prédéfinis que doivent suivre, ou que suivent, d'autres véhicules, puis
- on compare ces itinéraires prédéfinis à un itinéraire choisi que s'apprête à suivre le véhicule (suiveur) afin de déterminer l'itinéraire prédéfini ayant une partie commune la plus grande avec cet itinéraire choisi du véhicule (suiveur), puis
- on choisit comme véhicule dit pilote celui ayant l'itinéraire prédéfini déterminé afin d'utiliser des informations transmises par voie d'ondes par ce véhicule pilote et représentatives de conditions de circulation et/ou météorologiques rencontrées (quelques minutes ou quelques heures plus tôt), d'une éventuelle modification de son itinéraire prédéfini, et d'un éventuel événement subi, pour informer un conducteur du véhicule (suiveur) et proposer à ce conducteur une éventuelle modification de l'itinéraire choisi et/ou un éventuel événement.

Ainsi, le véhicule suiveur dispose d'informations (très) récentes qui correspondent précisément à ce qui est observable sur une partie au moins de l'itinéraire qu'il doit suivre, ce qui permet d'adapter ce dernier pour améliorer son optimalité.

Le procédé d'assistance selon l'invention peut comporter d'autres caractéristiques qui peuvent être prises séparément ou en combinaison, et notamment :
- chaque événement subi peut être choisi parmi (au moins) un arrêt de repos et un arrêt d'alimentation en énergie du véhicule pilote ;
- dans son étape, on peut choisir le véhicule pilote en fonction également d'au moins un critère appliqué à des informations contenues dans des messages, reçus par le véhicule (suiveur) et transmis par les autres véhicules, et représentatives au moins de caractéristiques de ces derniers ;
   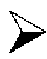 dans son étape, les informations peuvent être également représentatives d'un profil du conducteur du véhicule associé et/ou d'un état de vigilance en cours du conducteur du véhicule associé et/ou d'un mode de paiement à des péages routiers ;
   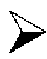 dans son étape, chaque critère peut être choisi parmi (au moins) des caractéristiques de véhicule les plus similaires à celles du véhicule (suiveur), le meilleur état général de véhicule, le plus faible niveau de pollution généré, un profil de conducteur le plus proche de celui du véhicule (suiveur), le meilleur état de vigilance en cours du conducteur, et un mode de paiement à des péages routiers identique à celui utilisé par le conducteur du véhicule (suiveur) ;
   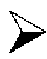 dans son étape, au moins un critère peut avoir été préalablement choisi par le conducteur du véhicule (suiveur) ;
- dans son étape, on peut choisir le véhicule pilote après l'avoir signalé au conducteur du véhicule (suiveur) et avoir reçu un accord de ce conducteur ;
- dans son étape, en cas de différence entre l'itinéraire prédéfini du véhicule pilote et l'itinéraire choisi du véhicule (suiveur) à partir d'un certain endroit, on peut déterminer pendant le trajet du véhicule (suiveur), en amont de ce certain endroit, un nouveau véhicule pilote afin d'utiliser des informations transmises par voie d'ondes par ce dernier à partir de ce certain endroit.

L'invention propose également un dispositif d'assistance, destiné à équiper un véhicule comprenant des moyens de communication propres à échanger des messages par voie d'ondes, et agencé pour comparer des itinéraires prédéfinis que doivent suivre, ou que suivent, d'autres véhicules, à un itinéraire choisi que s'apprête à suivre son véhicule afin de déterminer l'itinéraire prédéfini ayant une partie commune la plus grande avec cet itinéraire choisi du véhicule, puis pour choisir comme véhicule dit pilote celui ayant l'itinéraire prédéfini déterminé afin d'utiliser des informations transmises par voie d'ondes par ce véhicule pilote et représentatives de conditions de circulation et/ou météorologiques rencontrées, d'une éventuelle modification de son itinéraire prédéfini, et d'un éventuel événement subi, pour informer un conducteur de son véhicule et proposer à ce conducteur une éventuelle modification de l'itinéraire choisi et/ou un éventuel événement.

L'invention propose également un véhicule comprenant des moyens de communication propres à échanger des messages par voie d'ondes, et un dispositif d'assistance du type de celui présenté ci-avant.

D'autres caractéristiques et avantages de l'invention apparaîtront à l'examen de la description détaillée ci-après, et du dessin annexé, sur lequel l'unique figure illustre schématiquement et fonctionnellement une route sur laquelle circulent deux véhicules et à laquelle est couplé, via une bretelle d'accès, un parking sur lequel est garé un véhicule suiveur équipé d'un dispositif d'assistance selon l'invention.

L'invention a notamment pour but de proposer un procédé d'assistance destiné à offrir une assistance à un conducteur d'un véhicule VS souhaitant utiliser des informations fournies par un véhicule dit pilote Vj, et de ce fait appelé ci-après véhicule suiveur.

Il est rappelé que le véhicule suiveur VS peut être à conduite exclusivement manuelle ou au moins partiellement autonome (c'est-à-dire propre à être conduit manuellement pendant des phases de conduite manuelle ou de façon automatisée pendant des phases de conduite autonome, ou bien propre à être conduit en permanence de façon automatisée pendant des phases de conduite autonome).

Dans ce qui suit, on considère, à titre d'exemple non limitatif, que le véhicule suiveur VS et les potentiels véhicules pilotes Vj sont de type automobile. Il s'agit par exemple de voitures. Mais l'invention n'est pas limitée à ce type de véhicule. Elle concerne en effet tout type de véhicule pouvant circuler sur des voies de circulation terrestres.

On a schématiquement et fonctionnellement représenté sur l'unique figure une route comprenant deux voies de circulation VC1 et VC2. Ici, deux véhicules Vj (j = 1 ou 2) circulent sur la première voie de circulation VC1.

Chaque véhicule Vj comprend un dispositif d'aide à la navigation DN chargé de déterminer des itinéraires en fonction de données cartographiques et d'informations de circulation (ou trafic) et éventuellement d'informations météorologiques. De même le véhicule suiveur VS comprend un dispositif d'aide à la navigation DN chargé de déterminer des itinéraires en fonction de données cartographiques et d'informations de circulation (ou trafic) et éventuellement d'informations météorologiques.

On notera que l'on considère dans ce qui suit, à titre d'exemple non limitatif, que le véhicule suiveur VS et les potentiels véhicules pilotes Vj sont à conduite exclusivement manuelle. Mais l'un au moins d'entre eux (et en particulier le véhicule suiveur VS) pourrait être au moins partiellement autonome. Dans ce dernier cas, ce véhicule comprend également un dispositif de contrôle chargé de contrôler son positionnement par rapport à la direction transversale à la route et par rapport aux autres véhicules, et de le conduire sans que son conducteur n'agisse sur son volant ou sur l'une de ses pédales. Ce dispositif de contrôle assure le contrôle de son véhicule en fonction, notamment, d'informations relatives à son environnement extérieur et fournies au moins par des moyens d'analyse de l'environnement MA embarqués, d'informations représentatives de sa dynamique en cours (comme par exemple sa vitesse, son accélération, l'angle de son volant, sa vitesse de lacet, son cap) et d'informations représentatives de la dynamique en cours et éventuellement de la dynamique prévisionnelle (changement de trajectoire) des autres véhicules situés dans son environnement proche (grâce à ses capteurs embarqués). Par exemple, ce dispositif de contrôle peut constituer ce que l'homme de l'art appelle un dispositif ADAS (« Advanced Driver Assistance System »)).

Par exemple, un tel dispositif de contrôle peut être implanté, au moins partiellement, dans un calculateur CA d'un véhicule suiveur VS ou d'un véhicule potentiellement pilote Vj, qui assure éventuellement au moins une autre fonction. Mais il pourrait comprendre son propre calculateur dédié.

Les moyens d'analyse de l'environnement MA d'un véhicule suiveur VS ou d'un véhicule potentiellement pilote Vj peuvent, par exemple, comprendre des capteurs à ultrasons et/ou au moins une caméra et/ou au moins un laser de balayage et/ou au moins un radar ou lidar.

Par ailleurs, le véhicule suiveur VS et les véhicules potentiellement pilotes Vj comprennent chacun des moyens de communication MC propres à échanger des messages par voie d'ondes avec d'autres modules de communication MC équipant d'autres véhicules (et notamment ceux Vj) ainsi qu'éventuellement avec un réseau de communication ou un réseau radiophonique ou au moins une station d'informations située à proximité de l'une des voies de circulation VC1 et VC2. On notera que dans le cas d'échanges avec les véhicules potentiellement pilotes Vj ou avec une station d'informations, les communications se font de préférence par voie d'ondes à courte portée, par exemple en utilisant le standard de communication sans fil Car2X (G5) ou Bluetooth ou WiFi ou encore 5G ou encore la transmission en champ proche (ou NFT (« Near Field Transmission »)).

Comme évoqué précédemment, l'invention propose un procédé d'assistance destiné, notamment, à offrir une assistance au conducteur d'un véhicule suiveur VS souhaitant utiliser des informations fournies par un véhicule pilote Vj.

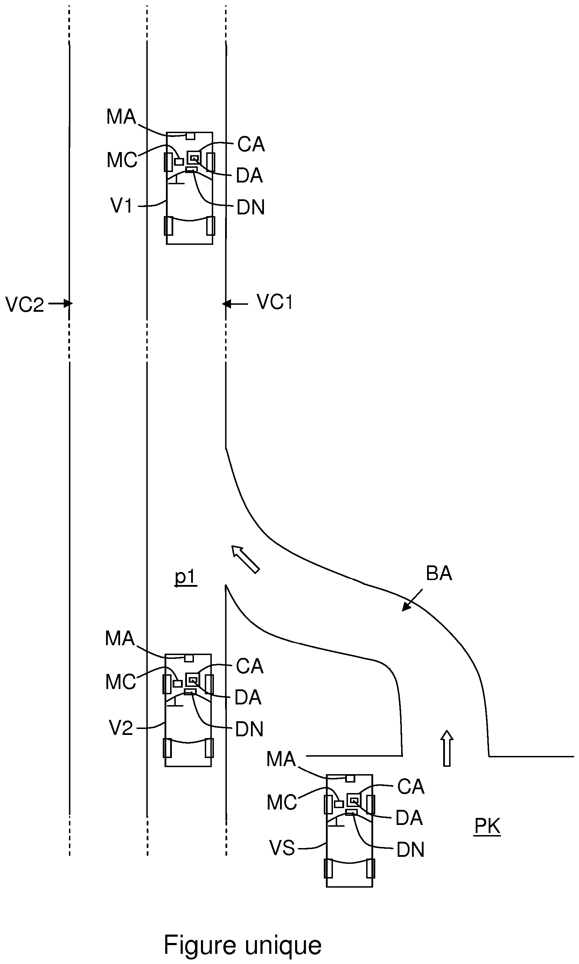

Un tel procédé peut être mis en œuvre au moins partiellement par un dispositif d'assistance DA. Dans l'exemple non limitatif illustré sur la figure 1, un dispositif d'assistance DA fait partie du calculateur CA du véhicule suiveur VS et de chaque véhicule potentiellement pilote Vj. Mais cela n'est pas obligatoire. Ce dispositif d'assistance DA pourrait en effet être un équipement couplé au calculateur CA, directement ou indirectement. Il pourrait notamment faire partie d'un autre calculateur ou appareil. Par conséquent, le dispositif d'assistance DA peut être réalisé sous la forme de modules logiciels (ou informatiques ou encore « software »), ou bien d'une combinaison de circuits électroniques (ou « hardware ») et de modules logiciels.

On notera que le dispositif d'assistance DA pourrait éventuellement faire partie du dispositif de contrôle.

Un procédé d'assistance, selon l'invention, comprend une étape dans laquelle on (le dispositif d'assistance DA du véhicule suiveur VS) détermine des itinéraires prédéfinis que doivent suivre, ou que suivent, d'autres véhicules Vj. On comprendra que cette détermination est réalisée avant que le véhicule suiveur VS soit parti du point de départ p1 de son itinéraire. De plus, cette détermination ne peut se faire qu'auprès des véhicules Vj dans lesquels un itinéraire a déjà été prédéfini au moyen de leur dispositif d'aide à la navigation DN. Cette détermination se fait par échange de messages par voie d'ondes entre moyens de communications MC, à la requête du dispositif d'assistance DA du véhicule suiveur VS.

Puis, l'étape du procédé se poursuit par la comparaison dans le véhicule suiveur VS (par son dispositif d'assistance DA) des itinéraires prédéfinis déterminés à un itinéraire choisi que s'apprête à suivre le véhicule suiveur VS, afin de déterminer l'itinéraire prédéfini qui a une partie commune la plus grande avec cet itinéraire choisi du véhicule suiveur VS.

Puis, l'étape du procédé se poursuit par le choix dans le véhicule suiveur VS (par son dispositif d'assistance DA) d'un véhicule Vj qui est alors dit pilote du fait que c'est celui qui a l'itinéraire prédéfini déterminé. Ce choix est destiné à utiliser des informations qui sont transmises par voie d'ondes (automatiquement ou sur requête) par ce véhicule pilote Vj et qui sont représentatives de conditions de circulation et/ou de conditions météorologiques rencontrées (quelques minutes ou quelques heures plus tôt) par le véhicule pilote Vj sur la partie commune de leurs itinéraires respectifs, d'une éventuelle modification de l'itinéraire prédéfini du véhicule pilote Vj, et d'un éventuel événement subi par ce véhicule pilote Vj, pour informer le conducteur du véhicule suiveur VS et proposer à ce conducteur une éventuelle modification de l'itinéraire choisi de son véhicule suiveur VS et/ou un éventuel événement pendant le trajet sur cet itinéraire choisi.

Le véhicule suiveur VS bénéficie ainsi d'informations (très) récentes qui correspondent précisément à ce qui est observable sur une partie au moins de l'itinéraire qu'il doit suivre. Cela permet d'adapter l'itinéraire du véhicule suiveur VS pour améliorer son optimalité.

Par exemple, un événement subi peut être un arrêt de repos (éventuellement pour un ravitaillement) décidé par le conducteur du véhicule pilote Vj, ou un arrêt d'alimentation en énergie du véhicule pilote Vj dans une station de fourniture d'énergie.

L'éventuelle modification de l'itinéraire choisi du véhicule suiveur VS est déterminée par le dispositif d'aide à la navigation DN du véhicule suiveur VS à la requête du dispositif d'assistance DA de ce dernier (VS), et à partir des informations définissant l'itinéraire prédéfini mis à jour du véhicule pilote Vj. Lorsque l'itinéraire du véhicule suiveur VS n'est pas impacté, il est possible de laisser en cible le véhicule pilote Vj. Dans le cas contraire, le dispositif d'assistance DA cherche une nouvelle cible qui correspond plus à l'itinéraire du véhicule suiveur VS.

L'éventuel événement proposé peut, par exemple, être identique à un événement subi par le véhicule pilote Vj. Par conséquent, il pourra par exemple s'agir d'un arrêt de repos (éventuellement pour un ravitaillement) ou d'un arrêt d'alimentation en énergie.

Pour informer le conducteur du véhicule suiveur VS ou proposer une éventuelle modification de l'itinéraire choisi ou un éventuel événement, le dispositif d'assistance DA du véhicule suiveur VS peut déclencher la diffusion d'un message sonore par au moins un haut-parleur du véhicule suiveur VS (éventuellement spatialisé afin d'attirer plus spécifiquement l'attention du conducteur) et/ou l'affichage d'un message textuel par au moins un écran du véhicule suiveur VS (par exemple faisant partie du combiné central ou du combiné du tableau de bord). Le conducteur peut alors fournir son accord verbalement ou en actionnant une touche digitale ou un organe de commande ou encore en sélectionnant une option affichée sur l'écran. En l'absence de réponse dans un intervalle de temps prédéfini, cela peut par exemple signifier que le conducteur n'est pas d'accord, et donc un autre véhicule pilote doit lui être proposé par le dispositif d'assistance DA ou bien la modification proposée de l'itinéraire choisi ou l'événement proposé n'est pas pris en compte.

On notera que dans l'étape du procédé, on (le dispositif d'assistance DA du véhicule suiveur VS) peut avantageusement choisir le véhicule pilote Vj en fonction également d'au moins un critère appliqué à des informations qui sont contenues dans des messages, reçus par le véhicule suiveur VS et transmis par les autres véhicules Vj (potentiellement pilotes), et qui sont représentatives au moins de caractéristiques de ces derniers (Vj).

Parmi les caractéristiques d'un véhicule on peut notamment citer sa puissance, sa motorisation, sa consommation moyenne, son type, sa charge, ou son état (par exemple fonction du nombre de kilomètres parcourus et/ou des révisions effectuées).

En présence de cette dernière option, dans l'étape du procédé les informations (auxquelles sont appliqués le(s) critère(s)) peuvent être également représentatives d'un profil du conducteur du véhicule Vj (potentiellement pilote) associé et/ou d'un état de vigilance en cours du conducteur du véhicule Vj (potentiellement pilote) associé et/ou d'un mode de paiement à des péages routiers utilisé par le conducteur du véhicule Vj (potentiellement pilote) associé.

Le profil du conducteur définit par exemple sa façon de conduire, à savoir plus ou moins sportive, ce qui peut avoir une influence sur la vitesse moyenne et la consommation d'énergie de son véhicule et donc sur la fréquence des arrêts d'alimentation en énergie.

L'état de vigilance en cours du conducteur peut également avoir une influence sur la vitesse moyenne et la consommation d'énergie de son véhicule, ainsi que sur la fréquence des arrêts de repos (ou pauses).

Toujours en présence de la dernière option, dans l'étape du procédé chaque critère peut, par exemple, être choisi parmi au moins :
- des caractéristiques de véhicule qui sont les plus similaires à celles du véhicule suiveur VS,
- le meilleur état général de véhicule,
- le plus faible niveau de pollution généré,
- un profil de conducteur qui est le plus proche de celui du véhicule suiveur VS,
- le meilleur état de vigilance en cours du conducteur, et
- un mode de paiement à des péages routiers identique à celui utilisé par le conducteur du véhicule suiveur VS.

Dans l'exemple illustré non limitativement sur l'unique figure, les deux véhicules V1 (j = 1) et V2 (j = 2) sont des pilotes potentiels car le véhicule suiveur VS, qui est initialement garé sur un parking PK, a obtenu leurs itinéraires prédéfinis respectifs, par exemple du fait qu'ils sont passés à proximité de lui. L'itinéraire choisi du véhicule suiveur VS débute à la position géographique p1 et se termine à une position géographique p2, tandis que l'itinéraire prédéfini du premier véhicule V1 a débuté à la position géographique p3, est passé par la position géographique p1 et se termine à une position géographique p4, et l'itinéraire prédéfini du second véhicule V2 a débuté à la position géographique p5, passe par la position géographique p1 et se termine à une position géographique p6. On considère ici que les premier V1 et second V2 véhicules ont une même partie d'itinéraire commune avec l'itinéraire choisi du véhicule suiveur VS (entre p1 et p7). Par conséquent, le dispositif d'assistance DA choisit par exemple le premier véhicule V1 du fait que les informations qu'il a transmises satisfont à plus de critères que celles transmises par le second véhicule V2.

On notera également que dans l'étape du procédé au moins un critère peut avoir été préalablement choisi par le conducteur du véhicule suiveur VS parmi une liste. Ce choix peut, par exemple, se faire grâce à l'affichage de la liste de critères sur un écran du véhicule suiveur VS, comme par exemple celui du combiné central qui est installé dans la planche de bord en position centrale.

Grâce à son choix, le conducteur du véhicule suiveur VS peut définir ses préférences en matière de véhicule pilote dont il veut utiliser les informations.

Mais dans une variante de réalisation le ou les critères peu(ven)t être imposé(s) par le dispositif d'assistance DA, du fait d'une configuration en usine.

Si aucun véhicule potentiellement pilote Vj ne satisfait au(x) critère(s) choisi(s) ou imposé(s), on se contente de choisir le véhicule pilote Vj dont l'itinéraire prédéfini présente la plus grande partie commune avec l'itinéraire choisi du véhicule suiveur VS.

On notera également que dans l'étape du procédé on (le dispositif d'assistance DA du véhicule suiveur VS) peut choisir le véhicule pilote Vj après l'avoir signalé au conducteur du véhicule suiveur VS et après avoir reçu un accord de ce conducteur.

Pour réaliser cette signalisation, le dispositif d'assistance DA du véhicule suiveur VS peut déclencher la diffusion d'un message sonore par au moins un haut-parleur du véhicule suiveur VS (éventuellement spatialisé afin d'attirer plus spécifiquement l'attention du conducteur) et/ou l'affichage d'un message textuel par au moins un écran du véhicule suiveur VS (par exemple faisant partie du combiné central ou du combiné du tableau de bord). Le conducteur peut alors fournir son accord verbalement ou en actionnant une touche digitale ou un organe de commande ou encore en sélectionnant une option affichée sur l'écran. En l'absence de réponse dans un intervalle de temps prédéfini, cela peut par exemple signifier que le conducteur n'est pas d'accord, et donc un autre véhicule pilote doit lui être proposé par le dispositif d'assistance DA.

On notera également que dans l'étape du procédé, en cas de différence entre l'itinéraire prédéfini du véhicule pilote Vj et l'itinéraire choisi du véhicule suiveur VS à partir d'un certain endroit, on (le dispositif d'assistance DA du véhicule suiveur VS) peut déterminer pendant le trajet du véhicule suiveur VS, en amont de ce certain endroit, un nouveau véhicule pilote Vj' (j' ≠ j) afin d'utiliser des informations transmises par voie d'ondes par ce dernier (Vj') à partir de ce certain endroit.

On notera également que lorsque le véhicule suiveur VS comprend un dispositif de contrôle (éventuellement de type ADAS), le dispositif d'assistance DA lui fournit certaines au moins des informations reçues du véhicule pilote Vj choisi et l'itinéraire choisi du véhicule suiveur VS, afin qu'il les utilise pour contrôler les déplacements de son véhicule suiveur VS pendant les phases de conduite autonome. Par exemple, le dispositif de contrôle (à fonction autonome) peut utiliser les alertes pour adapter la vitesse à la place ou en complément de la consigne de vitesse déduite des panneaux de circulation et des informations de navigation (GPS).

## Revendications

1. Procédé d'assistance pour un conducteur d'un véhicule (VS) comprenant des moyens de communication (MC) propres à échanger des messages par voie d'ondes, **caractérisé en ce qu'**il comprend une étape dans laquelle on détermine dans ledit véhicule (VS) des itinéraires prédéfinis que doivent suivre, ou que suivent, d'autres véhicules (Vj), puis on compare ces itinéraires prédéfinis à un itinéraire choisi que s'apprête à suivre ledit véhicule (VS) afin de déterminer l'itinéraire prédéfini ayant une partie commune la plus grande avec ledit itinéraire choisi du véhicule (VS), puis on choisit comme véhicule dit pilote celui ayant ledit itinéraire prédéfini déterminé afin d'utiliser des informations transmises par voie d'ondes par ce véhicule pilote et représentatives de conditions de circulation et/ou météorologiques rencontrées, d'une éventuelle modification de son itinéraire prédéfini, et d'un éventuel événement subi, pour informer un conducteur dudit véhicule (VS) et proposer à ce conducteur une éventuelle modification dudit itinéraire choisi et/ou un éventuel événement.

2. Procédé selon la revendication 1, **caractérisé en ce que** ledit événement subi est choisi dans un groupe comprenant un arrêt de repos et un arrêt d'alimentation en énergie dudit véhicule pilote.

3. Procédé selon l'une des revendications 1 et 2, **caractérisé en ce que** dans ladite étape on choisit ledit véhicule pilote en fonction également d'au moins un critère appliqué à des informations contenues dans des messages, reçus par ledit véhicule (VS) et transmis par lesdits autres véhicules (Vj), et représentatives au moins de caractéristiques de ces derniers (Vj).

4. Procédé selon la revendication 3, **caractérisé en ce que** dans ladite étape lesdites informations sont également représentatives d'un profil du conducteur du véhicule (Vj) associé et/ou d'un état de vigilance en cours du conducteur du véhicule (Vj) associé et/ou d'un mode de paiement à des péages routiers.

5. Procédé selon l'une des revendications 3 et 4, **caractérisé en ce que** dans ladite étape chaque critère est choisi dans un groupe comprenant des caractéristiques de véhicule les plus similaires à celles dudit véhicule (VS), le meilleur état général de véhicule, le plus faible niveau de pollution généré, un profil de conducteur le plus proche de celui dudit véhicule (VS), le meilleur état de vigilance en cours du conducteur, et un mode de paiement à des péages routiers identique à celui utilisé par le conducteur dudit véhicule (VS).

6. Procédé selon l'une des revendications 3 à 5, **caractérisé en ce que** dans ladite étape au moins un critère a été préalablement choisi par ledit conducteur du véhicule (VS).

7. Procédé selon l'une des revendications 1 à 6, **caractérisé en ce que** dans ladite étape on choisit ledit véhicule pilote après l'avoir signalé audit conducteur du véhicule (VS) et avoir reçu un accord de ce conducteur.

8. Procédé selon l'une des revendications 1 à 7, **caractérisé en ce que** dans ladite étape, en cas de différence entre ledit itinéraire prédéfini du véhicule pilote et ledit itinéraire choisi du véhicule (VS) à partir d'un certain endroit, on détermine pendant le trajet dudit véhicule (VS), en amont dudit certain endroit, un nouveau véhicule pilote afin d'utiliser des informations transmises par voie d'ondes par ce dernier à partir dudit certain endroit.

9. Dispositif d'assistance (DA) pour un véhicule (VS) comprenant des moyens de communication (MC) propres à échanger des messages par voie d'ondes, **caractérisé en ce qu'**il est agencé pour comparer des itinéraires prédéfinis que doivent suivre, ou que suivent, d'autres véhicules (Vj), à un itinéraire choisi que s'apprête à suivre ledit véhicule (VS) afin de déterminer l'itinéraire prédéfini ayant une partie commune la plus grande avec ledit itinéraire choisi du véhicule (VS), puis pour choisir comme véhicule dit pilote celui ayant ledit itinéraire prédéfini déterminé afin d'utiliser des informations transmises par voie d'ondes par ce véhicule pilote et représentatives de conditions de circulation et/ou météorologiques rencontrées, d'une éventuelle modification de son itinéraire prédéfini, et d'un éventuel événement subi, pour informer un conducteur dudit véhicule (VS) et proposer à ce conducteur une éventuelle modification dudit itinéraire choisi et/ou un éventuel événement.

10. Véhicule (VS) comprenant des moyens de communication (MC) propres à échanger des messages par voie d'ondes, **caractérisé en ce qu'**il comprend en outre un dispositif d'assistance (DA) selon la revendication 9.

## Patentansprüche

1. Verfahren zur Unterstützung eines Fahrers eines Fahrzeugs (VS) mit Kommunikationsmitteln (MC), die geeignet sind, Nachrichten mittels Wellen auszutauschen, **dadurch gekennzeichnet, dass** es einen Schritt umfasst, bei dem vordefinierte Routen bestimmt werden, die von anderen Fahrzeugen (Vj) in dem Fahrzeug (VS) zu verfolgen oder zu verfolgen sind, dann diese vordefinierten Routen mit einer gewählten Route verglichen werden, die das Fahrzeug (VS) im Begriff ist zu verfolgen, um die vordefinierte Route zu bestimmen, die den größten gemeinsamen Teil mit der gewählten Route des Fahrzeugs (VS) hat, dann wird das Fahrzeug, das die besagte vordefinierte Route bestimmt hat, als sogenanntes Pilotfahrzeug ausgewählt, um Informationen zu verwenden, die mittels Wellen von diesem Pilotfahrzeug übertragen werden und repräsentativ sind für die angetroffenen Verkehrs- und/oder Wetterbedingungen, für eine mögliche Änderung seiner vordefinierten Route und für ein mögliches erlittenes Ereignis, um einen Fahrer des besagten Fahrzeugs (VS) zu informieren und diesem Fahrer eine mögliche Änderung der besagten gewählten Route und/oder ein mögliches Ereignis vorzuschlagen.

2. Verfahren nach Anspruch 1, **dadurch gekennzeichnet, dass** das erlittene Ereignis aus einer Gruppe ausgewählt wird, die eine Raststation und eine Energieversorgungsstation des Pilotfahrzeugs umfasst.

3. Verfahren nach einem der Ansprüche 1 und 2, **dadurch gekennzeichnet, dass** in diesem Schritt das Pilotfahrzeug auch in Abhängigkeit von mindestens einem Kriterium ausgewählt wird, das auf Informationen angewandt wird, die in Nachrichten enthalten sind, die von dem Fahrzeug empfangen (VS) und von den anderen Fahrzeugen übertragen werden (Vj) und mindestens für Eigenschaften der letzteren repräsentativ sind (Vj).

4. Verfahren nach Anspruch 3, **dadurch gekennzeichnet, dass** in diesem Schritt diese Information auch repräsentativ ist für ein Profil des Fahrers des zugehörigen Fahrzeugs (Vj) und/oder für einen aktuellen Wachsamkeitszustand des Fahrers des zugehörigen Fahrzeugs (Vj) und/oder für ein Verfahren zur Zahlung von Straßenbenutzungsgebühren.

5. Verfahren nach einem der Ansprüche 3 und 4, **dadurch gekennzeichnet, dass** in diesem Schritt jedes Kriterium aus einer Gruppe ausgewählt wird, die Fahrzeugeigenschaften, die denen des Fahrzeugs (VS) am ähnlichsten sind, den besten Gesamtzustand des Fahrzeugs, den niedrigsten Grad der erzeugten Verschmutzung, ein Fahrerprofil, das dem des Fahrzeugs (VS) am nächsten kommt, den besten aktuellen Wachsamkeitszustand des Fahrers und ein Verfahren zur Zahlung von Straßenbenutzungsgebühren, das mit dem vom Fahrer des Fahrzeugs (VS) verwendeten identisch ist, umfasst.

6. Verfahren nach einem der Ansprüche 3 bis 5, **dadurch gekennzeichnet, dass** in diesem Schritt mindestens ein Kriterium zuvor von dem Fahrer des Fahrzeugs (VS) ausgewählt wurde.

7. Verfahren nach einem der Ansprüche 1 bis 6, **dadurch gekennzeichnet, dass** in diesem Schritt das Pilotfahrzeug ausgewählt wird, nachdem es dem Fahrer des Fahrzeugs (VS) signalisiert wurde und nachdem er eine Zustimmung von diesem Fahrer erhalten hat.

8. Verfahren nach einem der Ansprüche 1 bis 7, **dadurch gekennzeichnet, dass** in diesem Schritt im Falle eines Unterschieds zwischen der vordefinierten Route des Pilotfahrzeugs und der ausgewählten Route des Fahrzeugs (VS) von einem bestimmten Ort aus ein neues Pilotfahrzeug während der Fahrt des Fahrzeugs (VS) stromaufwärts von dem bestimmten Ort bestimmt wird, um Informationen zu verwenden, die mittels Wellen von letzterem von dem bestimmten Ort aus übertragen werden.

9. Assistenzvorrichtung (DA) für ein Fahrzeug (VS) mit Kommunikationsmitteln (MC), die zum Austausch von Nachrichten mittels Wellen geeignet sind, **dadurch gekennzeichnet, dass** sie so angeordnet ist, dass sie vordefinierte Routen, denen andere Fahrzeuge (Vj) folgen oder folgen sollen, mit einer ausgewählten Route vergleicht, der das Fahrzeug (VS) folgen wird, um die vordefinierte Route zu bestimmen, die einen größeren gemeinsamen Teil mit der ausgewählten Route des Fahrzeugs (VS) hat, dann als sogenanntes Pilotfahrzeug dasjenige zu wählen, das die besagte vordefinierte Route bestimmt hat, um Informationen zu nutzen, die mittels Wellen von diesem Pilotfahrzeug übertragen werden und repräsentativ sind für die angetroffenen Verkehrs- und/oder Wetterbedingungen, für eine mögliche Änderung seiner vordefinierten Route und für ein möglicherweise erlittenes Ereignis, um einen Fahrer des besagten Fahrzeugs (VS) zu informieren und diesem Fahrer eine mögliche Änderung der besagten gewählten Route und/oder ein mögliches Ereignis vorzuschlagen.

10. Fahrzeug (VS) mit Kommunikationsmitteln (MC), die in der Lage sind, Nachrichten mittels Wellen auszutauschen, **dadurch gekennzeichnet, dass** es außerdem eine Hilfsvorrichtung (DA) nach Anspruch 9 umfasst.

## Claims

1. Assistance method for a driver of a vehicle (VS) comprising communication means (MC) capable of exchanging messages by means of waves, **characterised in that** it comprises a step in which predefined routes to be followed, or to be followed, by other vehicles (Vj) are determined in the said vehicle (VS), then these predefined routes are compared with a chosen route which the said vehicle (VS) is about to follow in order to determine the predefined route having the greatest common part with the said chosen route of the vehicle (VS), then the vehicle having the said predefined route determined is chosen as the so-called pilot vehicle in order to use information transmitted by waves by this pilot vehicle and representative of traffic and/or meteorological conditions encountered, of a possible modification of its predefined route, and of a possible event suffered, to inform a driver of the said vehicle (VS) and to propose to this driver a possible modification of the said chosen route and/or a possible event.

2. Method according to claim 1, **characterized in that** said event suffered is selected from a group comprising a rest stop and a power supply stop of said pilot vehicle.

3. Process according to one of claims 1 and 2, **characterised in that** in said step said pilot vehicle is chosen also as a function of at least one criterion applied to information contained in messages, received by said vehicle (VS) and transmitted by said other vehicles (Vj), and representative at least of characteristics of the latter (Vj).

4. Method according to claim 3, **characterised in that** in said step said information is also representative of a profile of the driver of the associated vehicle (Vj) and/or of a current state of alertness of the driver of the associated vehicle (Vj) and/or of a method of payment at road tolls.

5. Process according to one of claims 3 and 4, **characterised in that** in said step each criterion is chosen from a group comprising vehicle characteristics most similar to those of said vehicle (VS), the best general condition of the vehicle, the lowest level of pollution generated, a driver profile closest to that of said vehicle (VS), the best current state of alertness of the driver, and a method of payment at road tolls identical to that used by the driver of said vehicle (VS).

6. Process according to one of claims 3 to 5, **characterised in that** in said step at least one criterion has been previously chosen by said driver of the vehicle (VS).

7. Process according to one of claims 1 to 6, **characterised in that** in said step said pilot vehicle is selected after having reported it to said driver of the vehicle (VS) and having received an agreement from this driver.

8. Method according to one of claims 1 to 7, **characterised in that** in said step, in the event of a difference between said predefined route of the pilot vehicle and said selected route of the vehicle (VS) from a certain location, a new pilot vehicle is determined during the journey of said vehicle (VS) upstream of said certain location in order to use information transmitted by the latter by means of waves from said certain location.

9. An assistance device (DA) for a vehicle (VS) comprising communication means (MC) capable of exchanging messages by means of waves, **characterised in that** it is arranged to compare predefined routes to be followed, or followed by other vehicles (Vj), with a chosen route which said vehicle (VS) is about to follow in order to determine the predefined route having the greatest part in common with said chosen route of the vehicle (VS), then to choose as the so-called pilot vehicle the one having the said predefined route determined in order to use information transmitted by waves by this pilot vehicle and representative of traffic and/or meteorological conditions encountered, of a possible modification of its predefined route, and of a possible event suffered, to inform a driver of the said vehicle (VS) and to propose to this driver a possible modification of the said chosen route and/or a possible event.

10. Vehicle (VS) comprising communication means (MC) capable of exchanging messages by means of waves, **characterised in that** it also comprises an assistance device (DA) according to claim 9.
